# EUROPEAN PATENT APPLICATION

(11) **EP 0 808 692 A2**
(43) Date of publication of application: **26.11.1997**
(21) Application number: 97830227.1
(22) Date of filing: 16.05.1997
(51) Int. Cl.: B23Q 15/22, B25J 3/00

(54) **Remote control system for a numerical control machine**

(30) Priority: 21.05.1996 IT BS960047
(71) Applicant: C.M.S. Costruzioni Macchine Speciali S.p.A., 24019 Zogno (Bergamo) (IT)
(72) Inventor: Aceti, Pietro, 24100 Bergamo (IT)
(74) Representative: Manzoni, Alessandro

(57) **Abstract**

The invention regards a remote control system for a numerical control operating machine that will move the head and/or machine spindle according to four or more axes in such a way as to use a sample to define the most important points of work runs to be used later on a given piece. It consists of a lever control device (joy-stick) capable of controlling the linear movements of the machine according to three orthogonal axes (X-Y-Z), and swivel-mounted around a horizontal axis B on a first support 13, to control the movement of the operating machine according to a fourth axis. The first support with said device is swivel-mounted around a vertical axis C on a second support 14, to control the movement of the operating machine according to a fifth axis.

## Description

This invention concerns, in general, numerical control machines with four, or more, controlled axes, and in particular refers to a remote control system for such machines at the moment of defining the work runs for a piece to be worked.
For a numerical control operating machine to correctly work a piece, especially where the operations are to be complex, it may be necessary to define the work runs using a sample piece.

This operation needs to be carried out in advance by the same machine, so that it can learn the operations and work runs to be followed. The method, known in jargon as "advanced teach-in", is an internal function of a machine's numerical control and enables the most important points of the work runs to be traced on the sample, by means of a sensor (Renshaw).

With current techniques, this function is carried out by controlling each movement axis of the machine individually, operating directly on the machine and using trial and error. The same applies for the total or partial mapping of a piece.

The individual control of each axis of the machine, or rather, the operating head that carries the spindle, implies a slow, complex and uncomfortable task of tracing/mapping which relies on the operator's precision skills. Above all, the operator will be required to work directly on the machine, in the presence of moving parts and in potentially dangerous situations.

The aim of this invention is to remedy the above-mentioned disadvantages using a command system, which will control all axes of a numerical control machine, even using interpolation, and employ the "advanced teach-in" method at a distance from the machine, guaranteeing maximum safety and ease of use.

To this end, this invention proposes a remote control system with four, or preferably five, axes which will enable all the controlled axes of a numerical control machine to move with the greatest ease; the system interacts with a sensor applied to the spindle of the machine's operating head and consents the "advanced teach-in" method to be used, by means of the appropriate function keys.

The simplicity of the control and its ergonomic design are further advantages; the operator's job is made easier by the intuitive movements used to communicate with the operating unit.

The remote control system in this invention has been based on a lever control device, known as a "joystick", which is ideal for controlling three orthagonal axes of the operating unit's linear movement. This device was placed on rotating supports which were set up and operated for controlling the rotation of a fourth and fifth axis, respectively, of the operating unit, in particular, the rotation of the spindle of such a unit along right-angled planes. The system was coupled to electric actuators with position encoder aboard the operating unit.

A practical example of the remote control system proposed here is illustrated in the enclosed diagrams, where:
Fig.1 shows a front view of the apparatus;
Fig.2 shows a side view;
Fig.3 shows a view from above; and
Fig.4 shows a push-button panel and viewer for controlling the phases of the "advanced teach-in" method.

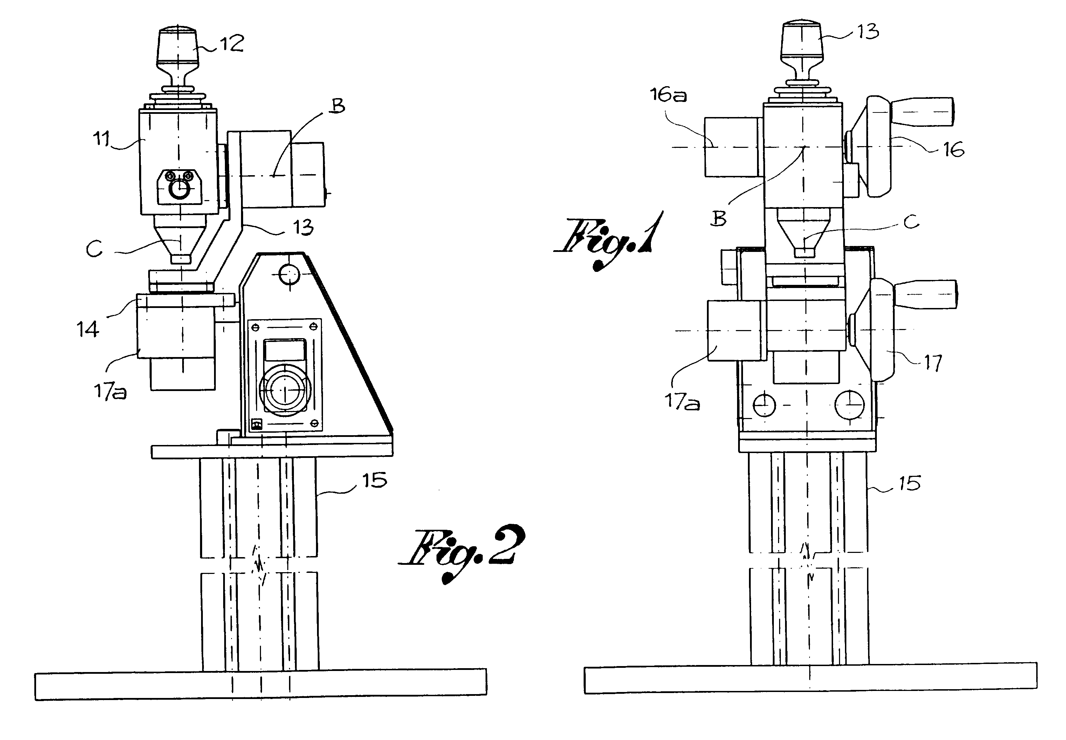

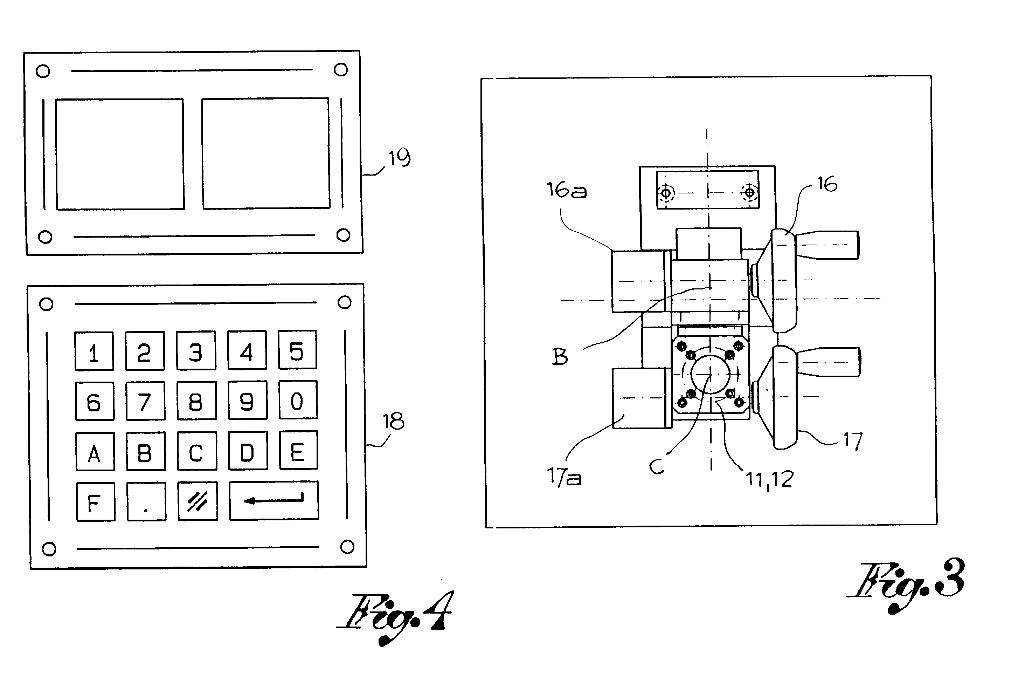

The system includes a control device 11, known as a "joy-stick", having a manoeuvring lever 12 able to make oscillatory movements in all directions. This device is swivel-mounted on a first support 13, which is in turn swivel-mounted on a second support 14, placed on a pedestal 15.

More precisely, the command device 11 rotates on the first support around a horizontal axis B, at right angles to the axis of the device itself, and its rotation is commanded, for example, by means of a first handwheel 16 and controlled by an encoder 16a, or another instrument for detecting position.

The first support 13, and with it the device 11, rotates on the second support 14 around a vertical axis C, and its rotation is commanded, for example, by a second handwheel 17 and controlled by an encoder 17a, or by another suitable instrument.

The behaviour of the device 11 and the means of command/control 16, 16a, 17, 17a of the rotations around the axes B and C are connected and governed by the corresponding electric actuators aboard the numerical control operating unit to be operated. These actuators also have an encoder or other instrument for detecting positions moment by moment. A program will permit the remote system to interface and interact with the operating unit.

The device 11 is set up to control the linear movements of the remote unit, according to three orthogonal axes X-Y-Z. The rotation of device 11 on the first support around axis B enables a fourth axis of the operating unit to be controlled, for example, the oscillation/inclination of a spindle along a horizontal axis.

The rotation of device 11 and the first support 13 around the C axis on the second support 14 enables a fifth axis of the operating unit to be managed, for example, the inclination of the spindle at right angles to the inclination plane associated with axis B.

Together, they move the operating unit around the sample piece either to establish the work runs, or perform a complete or partial mapping of the piece itself. An alphanumeric keyboard 18 and a viewer 19 aboard the remote control system make it a simple task to key-in, control and memorize all the operations.

The system described above offers a variety of manoeuvres, of which the most useful are:
- the possiblity of inclining the spindle (B and C axes) while keeping the cutter tip still;
- the possibility of defining a point on all the axes X-Y-Z-B-C near to the effective point to be keyed-in (APPROACH POINT), to which it is possible to return automatically from any position; this means it is possible to quickly digit several attempts using movements at right angles to the cutter axis;
- the possibility of plotting planes on the sample, where plane operations will be defined by the user (scouring, smoothing, drilling, routing, etc.)
- the possibility of defining a plane on which to design circles and rectangles;
- the generation of splines on 5 axes, starting from the selected points;
- the possibility of printing the selected run;
- the visualization of the planned run and the run interpolated on 5 axes

## Claims

1. Remote control system for a numerical control operating machine, to move the head and/or spindle of the machine according to four or more axes, so as to define with a sample the most important points in work runs for working a given piece. The machine is equipped with controlling actuators to move the head and/or spindle according to said axes, characterized by a control lever (joystick) for controlling the machine's linear movements according to three orthagonal axes (X-Y-Z), where the said device is swivel-mounted around a horizontal axis B on a first support 13 to control the operating machine's movement according to a fourth axis; where the said first support of said device is swivel-mounted around a vertical axis C on a second support 14 to control the operating machine according to a fifth axis; where the means for controlling the movements according to the axes (X-Y-Z-B-C) are coupled to the controlling actuators on the machine.

2. Remote control system according to revendication 1, where the rotation of the lever control device 11 around said horizontal axis and the rotation of the first support with said device around said vertical axis on said second support are commanded by handwheels and controlled by encoder or other instrument for identifying position.

3. Remote control system according to revendications 1 and 2, where the rotation of the lever control device 11 around said horizontal axis B controls the oscillation/inclination of the operaiing machine spindle around a horizontal axis, and where the rotation of said device with said first support around said vertical axis C controls the inclination of the operating machine spindle in a plane at right angles to the oscillation/inclination controlled by the rotation of the device around the horizontal axis.

4. Remote control system according to the previous revendications, where the oscillation/inclination of the spindle in perpendicular planes takes place while the tip of the utensil carried by the spindle remains fixed.

5. Remote control system according to the previous revendications, characterized by a keyboard with function keys and a viewer, for visualizing and memorizing the control phases of the operating machine according to a preestablished program which interfaces between the system and the machine.
